(19) Europäisches Patentamt

European Patent Office

Office européen des brevets

(11) **EP 0 674 985 B1**

(12) **EUROPÄISCHE PATENTSCHRIFT**

(45) Veröffentlichungstag und Bekanntmachung des Hinweises auf die Patenterteilung:
**11.08.1999 Patentblatt 1999/32**

(51) Int. Cl.$^6$: **B29C 45/66**, B29C 45/68, B29C 45/84

(21) Anmeldenummer: **95104591.3**

(22) Anmeldetag: **29.03.1995**

(54) **Formschliesseinheit für eine Spritzgiessmaschine und Verfahren zum Betreiben derselben**

Mould closing unit for an injection moulding unit and method for its operation

Unité de fermeture de moule pour une machine à mouler par injection et procédé pour son opération

(84) Benannte Vertragsstaaten:
**AT CH DE ES FR GB IT LI NL**

(30) Priorität: **02.04.1994 DE 4411650**
**02.04.1994 DE 4411649**

(43) Veröffentlichungstag der Anmeldung:
**04.10.1995 Patentblatt 1995/40**

(73) Patentinhaber: **Hehl, Karl**
**72290 Lossburg (DE)**

(72) Erfinder: **Hehl, Karl**
**72290 Lossburg (DE)**

(74) Vertreter: **Reinhardt, Harry et al**
**Mayer, Frank, Reinhardt,**
**Schwarzwaldstrasse 1A**
**75173 Pforzheim (DE)**

(56) Entgegenhaltungen:
EP-A- 0 096 183    DE-A- 2 022 191
FR-A- 1 493 473    GB-A- 1 184 909
GB-A- 1 193 405    US-A- 3 712 774

- **PATENT ABSTRACTS OF JAPAN vol. 9 no. 152 (M-391) [1875] ,27.Juni 1985 & JP-A-60 030321 (MATSUSHITA DENKI SANGYO)**
- **PATENT ABSTRACTS OF JAPAN vol. 13 no. 335 (M-856) [3683] ,27.Juli 1989 & JP-A-01 113220 (JAPAN STEEL WORKS)**

**Beschreibung**

Die Erfindung betrifft eine Formschließeinheit für eine Spritzgießmaschine zur Verarbeitung von Kunststoffen, pulverförmigen Massen und dergleichen nach dem Oberbegriff des Anspruches 1 sowie Verfahren zum Betreiben derselben nach dem Oberbegriff der Ansprüche 8 oder 12.

Aus der DE-A 20 22 191 ist eine Formschließeinheit für eine Kunststoff-Spritzgießmaschine bekannt, bei der eine erste Einheit bestehend aus einem Drehkolbenantrieb dafür bestimmt ist, die Formschlußbewegung durchzuführen, während eine zweite Einrichtung in Form einer kurzhubigen hydraulischen Kolben-Zylindereinheit die Schließkraft aufbringt, nachdem durch die erste Einrichtung die Form bis auf ein vorbestimmtes Spaltmaß geschlossen wurde. Die hydraulische Einrichtung ermöglicht dabei eine feinfühlige Regelung und die gezielte Aufbringung der Schließkraft. Beim Aufbringen der Schließkraft sind die beiden Einrichtungen seriell geschaltet.

Aus der JP-A 60 030 321 ist eine in einem C-Bügel aufgenommene Formschließeinheit bekannt, bei der eine erste außerhalb der Spritzachse angeordnete Einheit die Formhälften in Anlage bringt. Um dies zu ermöglichen, ist der bewegliche Formträger auf gesonderten Führungen geführt. Während die erste Einrichtung die Formhälften in Anlage bringt, gelangt ein Kniehebel in Strecklage. Dieser Kniehebel ist an seinem von der Form abgewandten Ende mit einer Exzenterwelle verbunden, die bei Betätigung ihrerseits dann die Schließkraft aufbringt. Der Exzenter wirkt dabei auf das passive Kraftübertragungselement in Form des Kniehebels, der zu diesem Zweck zunächst in Strecklage gebracht werden muß. Dadurch läßt sich aber eine feinfühlige Regelung, insbesondere eines Spaltmaßes nicht wirksam durchführen. Darüber hinaus beaufschlagt die Exzenterwelle lediglich die Form an sich, so daß aufgrund der parallelen Anordnung der beiden Schließmechanismen ein gesonderter Raumbedarf entsteht.

Aus der JP-A 62-64520 ist eine Formschließeinheit bekannt, bei der die beim Formschluß auftretenden Bewegungen verschiedenen Baugruppen zugewiesen werden. Eine erste Baugruppe ist ein über eine Kugelrollspindel angetriebener Kniehebelmechanismus, der im wesentlichen den beweglichen Formträger auf den stationären Formträger hin- und von diesem wegbewegt. Nachdem die Gießformhälften aufeinander zu bewegt worden sind, verbleibt jedoch ein Spalt. Die restliche Bewegung erfolgt dann über eine zweite Einrichtung, die an einer Schraubenhülse angreift, die zugleich die Lagerung der Kugelrollspindel ist. In einer ersten Stufe erfolgt über diesen Mechanismus mit schneller Geschwindigkeit und geringem Drehmoment eine Bewegung bis zum Formschluß. Nachdem der Formschluß dann endgültig bereits unter Einsatz der zweiten Einrichtung erfolgt ist, schaltet diese zweite Einrichtung auf eine Betriebsweise mit hohem Drehmoment um, um ausgehend von der zweiten Einrichtung unter Zwischenschaltung der ersten Einrichtung dann die Schließkraft aufzubringen. Da eine eindeutige Aufgabenverteilung auf die beiden Einrichtungen nicht erfolgt, sind aufwendige Getriebe und Umschaltstufen erforderlich, selbst wenn ein Abstützelement für die erste Einrichtung beweglich gelagert ist, so daß sich die gesamte Einrichtung an dem Abstützelement für die zweite Einrichtung abstützen kann.

Bei einer Formschließeinheit nach der WO 92/11993 werden die Bewegungen, die beim Formschluß einer Spritzgießmaschine erforderlich sind, auf zwei Baugruppen aufgeteilt, die nacheinander in zwei Stufen betätigbar sind. Zur Bewegung des beweglichen Formträgers wird ein Spindelantrieb eingesetzt, während zur Aufbringung der Schließkraft ein Hydraulikzylinder vorgesehen ist. Die Gewindespindel ist im Tauchkolben des Hydraulikzylinders beweglich gelagert. Beide Elemente stützen sich an einem gemeinsamen Abstützelement ab. Bei Betätigung der Gewindespindel wird diese durch Federmittel in einer Null-Lage gehalten, so daß sich eine flexible Aufhängung der Gewindespindel ergibt, die beim Aufbringen der Schließkraft Schwierigkeiten bereiten kann. Während des Aufbringens der Schließkraft muß zudem die Gewindespindel - sofern sie nicht selbsthemmend ist - über ihren Antriebsmotor in Anlage gehalten werden, um ein Rückdrehen zu verhindern. Sie dient gleichzeitig als Zuhaltekraftüberträger und Zuhaltekrafterzeuger.

Bei einer weiteren Formschließeinheit nach der EP-B 271 588, insbesondere Fig. 3, sind zwei Spindelsysteme hintereinander geschaltet. Die Spindelsysteme werden nacheinander betätigt, wobei Kupplungen vorgesehen sind, die ein Trennen der jeweils nicht benötigten Spindel aus dem Kraftfluß ermöglichen. Hierbei ist der doppelte Aufwand der Spindellagerung in bezug auf die volle Zuhaltekraft nicht zu unterschätzen. Zum Festlegen der Spindel können auch Bremsmittel oder Klauenkupplungen vorgesehen sein, deren Feder so eingestellt ist, daß beim Formschluß eine Reaktionskraft die Kupplung erzeugt.

Aus der DE-A 43 45 034 bzw. der WO 94/22655 ist ein Verfahren zur Steuerung einer elektrisch angetriebenen Spritzgießmaschine bekannt. Um eine zuverlässige Regelung der Zufahrkraft während der Formschutzphase zu erzielen, wird hierbei vorgeschlagen, den allein für den Formschluß vorgesehenen Kniehebelantrieb über einen Servomotor zu betreiben und die Kraft während der Schließbewegung über die Motorstromaufnahme oder im Bereich des Gelenkkopfes des Kniehebels zu erfassen. Der dadurch erfaßte Wert kann daraufhin mit einer Sollkurve verglichen werden und überwacht werden. Da jedoch nur ein einziger Antrieb zur Erzeugung der Formschlußbewegung erforderlich ist, muß der Kraftsensor geeignet sein, die Kräfte über den gesamten Schließbereich aufzunehmen, so daß sich eine feinfühlige Zufahrkraftregelung nicht realisieren läßt. Eine Regelung der nach Anlage der Teile der Gießform aneinander erzeugten Schließkraft ist nicht vorgesehen und kann - wenn überhaupt - nur mit großem Energieaufwand realisiert werden, da der Kniehebel nur in seiner Strecklage optimal einsetzbar ist.

Ausgehend von diesem Stand der Technik liegt der vorliegenden Erfindung die Aufgabe zugrunde, eine Formschließeinheit sowie ein Verfahren der eingangs genannten Gattung derart weiterzubilden, daß auf kostengünstigste Weise eine zuverlässige Kraftübertragung sowie Kraftsteuerung oder -regelung ermöglicht wird.

Diese Aufgabe wird durch eine Formschließeinheit mit den Merkmalen des Anspruches 1 bzw. ein Verfahren mit den Merkmalen der Ansprüche 8 oder 12 gelöst.

Die aufzubringenden Bewegungen und Kräfte werden dabei gezielt einzelnen Baugruppen Zugewiesen. Die erste Einrichtung, vorzugsweise ein Spindelsystem, dient zur Bewegung des beweglichen Formträgers, während eine zweite Einrichtung die nach dem Zusammenführen der Gießform noch erforderliche Bewegung aufbringt, die die Schließkraft erzeugt. Beim Aufbringen der Schließkraft wird jedoch die gesamte erste Einrichtung einschließlich Formträger von der zweiten Einrichtung beaufschlagt und dient insofern lediglich noch als Zuhaltekraftüberträger. Aufgrund der klar aufgegliederten Kraftverteilung können die Antriebsmotoren auf ihre jeweilige Funktion genau abgestimmt werden, so daß in der ersten Einrichtung günstigere kleine Antriebsmotoren einsetzbar sind.

Der Kraftfluß vom Abstützelement für die erste Einrichtung zum Abstützelement für die zweite Einrichtung ist klar festgelegt. Ausgehend von dem weiteren Abstützelement können dann Kraftübertragungsmittel eine Verbindung innerhalb der Formschließeinheit zum stationären Formträger schaffen und dadurch einen Kraftrahmen aufbauen. Als Kraftübertragungsmittel können dabei bekannte Holme genauso vorgesehen werden wie Elemente, die die Schließkräfte um den Formspannraum herumleiten. Auch der Maschinenfuß kann als Kraftübertragungsmittel vorgesehen werden. Mit dem Exzenterantrieb können die Schließkräfte sehr genau erzeugt werden und dennoch schonend auf die gesamte erste Einrichtung übertragen werden.

Bei einer Ausbildung nach den Ansprüchen 2 und 3 ergibt sich eine Spindelrückdrehsicherung, bei der die Sicherung selbst aus den eigentlichen Druckelementen besteht und somit direkt in den Kraftfluß integriert ist. Werden zwei parallel angeordnete Spindelsysteme vorgesehen, können die Rückdrehmomente bei Werkzeugzuhaltung sich zum Teil wieder aufheben und hierdurch die Führungssysteme weniger belasten. Bei einer Ausbildung nach Anspruch 3 werden die Spindellager nur noch durch die Kräfte belastet, die beim Beschleunigen bzw. Abbremsen des beweglichen Formträgers auftreten. Im eigentlichen Hochdruckbereich der Werkzeugzuhaltung sind die Lager der Spindel maximal mit der Kraft der Rückstellmittel beaufschlagt.

Bei einer Ausbildung nach Anspruch 5 wird die Schließkraft erst bei absolutem Stillstand der Spindeln aufgebaut, so daß die Spindeln entsprechend kleiner ausgelegt werden können oder sich bei großen Spindeln eine entsprechend längere Lebensdauer ergibt, da die dynamische Belastung geringer ist. Die dynamische Belastung aber steht in direktem Zusammenhang mit der Gesamtlebensdauer des Spindelsystems.

Die Funktionsaufteilung auf die erste Einrichtung zur Bewegung des beweglichen Formträgers bis etwa zur Anlage der Gießform und auf die zweite Einrichtung zur Erzeugung der Schließkraft, erleichtert den Einsatz von ebenfalls zweckorientiert ausgerichteten Sensoren. So kann im Kraftfluß der ersten Einrichtung ein hochempfindlicher Sensor vorgesehen werden, der für die Zufahrkraftregelung prädestiniert ist, während im Kraftfluß der zweiten Einrichtung, bei deren Betätigung die erste Einrichtung aus dem Kraftfluß ausgekoppelt wird, ein Kraftsensor vorgesehen werden kann, der für die Zuhaltekraftregelung besonders geeignet ist (Anspruch 6,7).

Nach Anspruch 8 schafft die durch den Aufbau der Formschließeinheit getroffene Funktionstrennung in eine erste Einrichtung zur Bewegung des beweglichen Formträgers und eine zweite Einrichtung zur Aufbringung der Schließkraft die Möglichkeit, einen empfindlichen Kraftsensor im Kraftfluß der ersten Einrichtung vorzusehen und dadurch die Zufahrkraft während der Bewegung des beweglichen Formträgers so genau wie möglich aufzunehmen. Dadurch läßt sich eine sehr exakte Rückmeldung der Werkzeugsicherungs- oder Formschutzkraft ermöglichen. Dieser Sensor kann zudem eingesetzt werden, um nach Anspruch 10 eine von Spritzzyklus zu Spritzzyklus genau wiederholbare vorgegebene Anlagekraft der Werkzeughälften zu erkennen, um aufbauend auf dieser Kraft eine exakt gesteuerte Zuhaltekraft zu verwirklichen, die unabhängig von Wärmeausdehnungen im System bei jedem Spritzzyklus durch das geregelte Anlegen der Teile der Spritzgießform auf eine vordefinierte Kraft wiederholt ansteuerbar ist.

Mit dem Exzenterantrieb als zweite Einrichtung wird aufgrund der Funktionsteilung eine äußerst einfache Möglichkeit geschaffen, die Zuhaltekraft zu regeln. Der Exzenterantrieb wird in diesem Fall beim Aufbringen der Schließkraft nicht in die wirtschaftlichste Strecklage überführt, wie dies bei der Zufahrkraftregelung der Ansprüche 8 bis 11 der Fall ist, sondern vor der Totlage wird noch ein Regel bereich vorgesehen. Dadurch ist es möglich, während des aktuellen Formschlusses selbst die Zuhaltekraft zu regeln und nicht nur von Zyklus zu Zyklus nachzuregeln. Die hohe Kraftübersetzung des Exzenterantriebs in seiner unteren Totlage erlaubt, durch relativ große Winkeländerungen kleine Zuhaltekraftabweichungen selbst während der Einspritz- und Nachdruckphase durch geringen Energieaufwand auszuregeln.

Weitere Vorteile ergeben sich aus den Unteransprüchen sowie der Figurenbeschreibung. Im folgenden wird die Erfindung anhand eines Ausführungsbeispiels erläutert. Es zeigen:

Fig. 1     eine Seitenansicht einer Formschließeinheit mit einem elektromechanisch angetriebenen Exzenterantrieb zur Aufbringung der Schließkraft,

Fig. 2     einen vergrößerten, teilweise geschnittenen Ausschnitt aus Fig. 1 im Bereich der Abstützelemente,

Fig. 3     eine teilweise geschnittene Draufsicht der Formschließeinheit in einer Darstellung gemäß Fig. 2,

Fig. 4     einen Schnitt durch die Formschließeinheit gemäß Linie 4-4,

Fig. 5     den Kraftverlauf der Kraft Fs des Kraftsensors während der Bewegung des beweglichen Formträgers bis zum Aufbringen der Anlagekraft mittels der ersten Einrichtung,

Fig. 6     den schematischen Verfahrensablauf während Zufahrkraftregelung und Zuhaltekraftsteuerung,

Fig. 7     ein Diagramm, bei dem die vom Exzenter maximal aufbringbare Kraft über den Ergänzungswinkel $\alpha$ bei Drehen des Exzenterantriebs aus seiner Nulllage aufgetragen ist,

Fig. 8     ein Diagramm zur Verdeutlichung des Verhältnisses zwischen Ergänzungswinkel $\alpha$, Restwinkel $\Delta\alpha$ und zur Kraftaufbringung erforderlichem Weg s,

Fig. 9     das vom Exzenterantrieb aufbringbare Exzentermoment während der Zuhaltekraftregelung über der Winkelverstellung des Exzenterantriebs,

Fig. 10    den schematischen Verfahrensablauf bei der Zuhaltekraftregelung.

Die Formschließeinheit ist Teil einer Spritzgießmaschine zur Verarbeitung von Kunststoffen, pulverförmigen Massen wie z. B. keramischen Massen und dergleichen. Sie besitzt einen stationären Formträger 12 und einen beweglichen Formträger 11, die zwischen sich einen Formspannraum S zur Aufnahme einer Gießform 33 aufweisen. Über eine erste Einrichtung 10 wird die Bewegung des beweglichen Formträgers auf den stationären Formträger 12 zu und von diesem weg entlang einer Führung 45 bewirkt. Zur Aufbringung der Schließkraft ist eine zweite Einrichtung, 30 vorgesehen. Die zweite Einrichtung wird nach der ersten Einrichtung während des Formschlusses, insbesondere zur Aufbringung der Schließkraft der Gießform 33 betätigt. Die erste Einrichtung stützt sich an einem ersten Abstützelement 13 ab, das durch Kraftübertragungsmittel 25 mit dem stationären Formträger in Verbindung steht.

In Schließrichtung und aus Sicht der ersten Einrichtung 10 zur Bewegung des beweglichen Formträgers 11 hinter dem ersten Abstützelement ist ein weiteres Abstützelement zur Abstützung der zweiten Einrichtung zur Aufbringung der Schließkraft vorgesehen. Wird diese zweite Einrichtung betätigt, so beaufschlagt sie die erste Einrichtung 10 mit erstem Abstützelement 13 und beweglichen Formträger 11 in ihrer Gesamtheit als Zuhaltekraftüberträger. Krafterzeuger für die Schließkraft hingegen ist lediglich die zweite Einrichtung. Die zweite Einrichtung kann jedoch auch an anderer Stelle im Kraftfluß wirksam werden, wie z.B. in der älteren Anmeldung P 44 11 649.7 beschrieben.

Der Kraftfluß erfolgt ausgehend vom beweglichen Formträger zunächst über die erste Einrichtung zum ersten Abstützelement, das seinerseits über Übertragungselemente mit dem weiteren Abstützelement verbunden ist. Erstes Abstützelement und beweglicher Formträger sind insofern auch an den Kraftübertragungsmitteln beweglich gehalten. Ausgehend vom weiteren Abstützelement erfolgt der Kraftfluß dann über die Kraftübertragungsmittel 25, die im Ausführungsbeispiel Holme sind, zum stationären Formträger. Statt dieser Holme können als Kraftübertragungsmittel jedoch auch Elemente vorgesehen sein, die die Schließkraft um den Formspannraum S herumleiten oder es kann sogar der Maschinenfuß als Kraftübertragungsmittel vorgesehen werden. Die gesamte Formschließeinheit ist lediglich am stationären Formträger 12 über Befestigungsmittel 36 mit dem Maschinenfuß 26 verbunden.

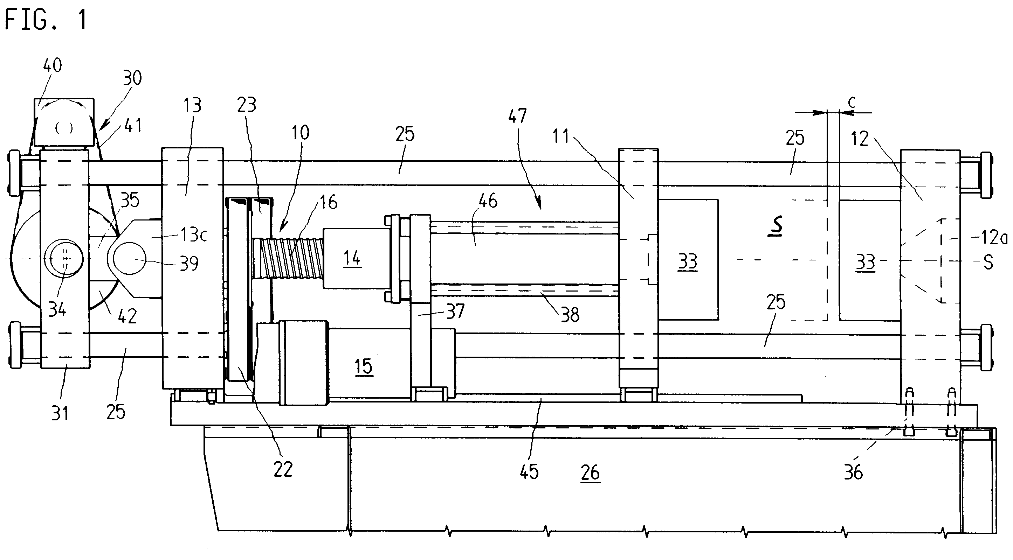

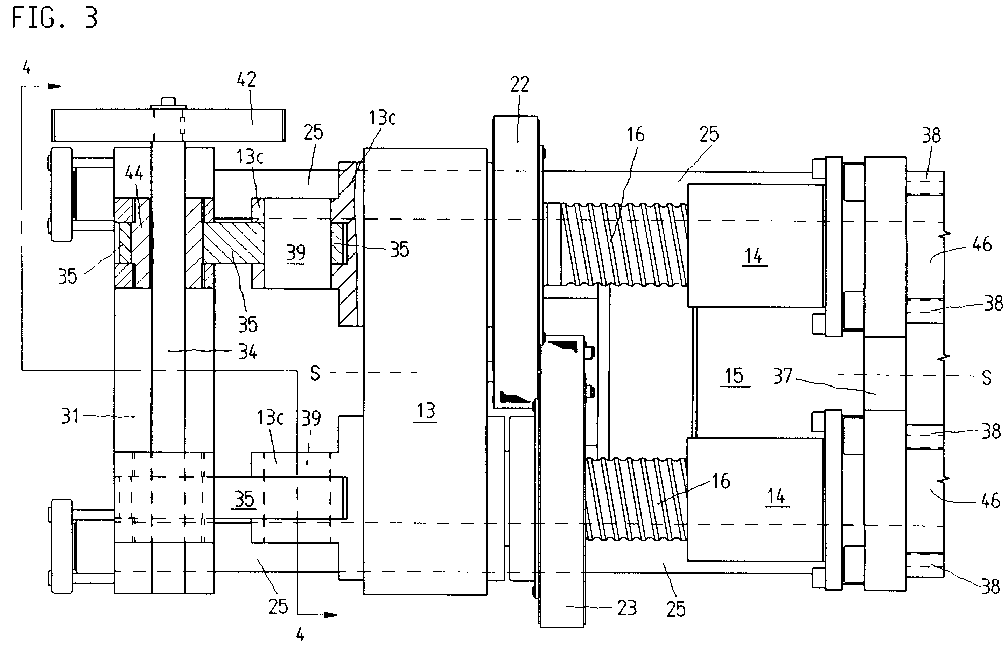

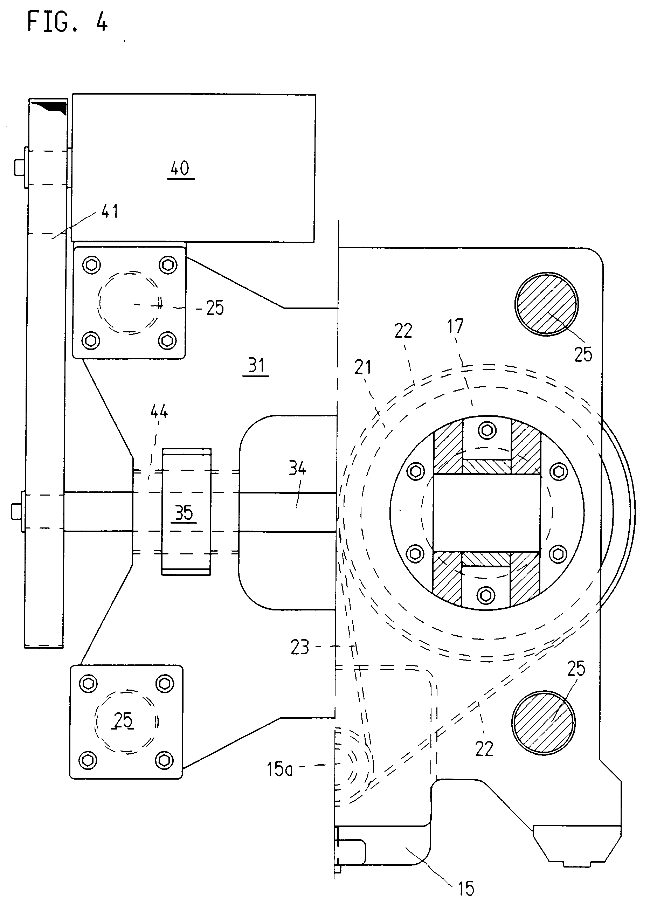

Im Ausführungsbeispiel der Fign. 1-4 wird als zweite Einrichtung 30 zur Aufbringung der Schließkraft ein vorzugsweise elektromechanisch angetriebener Exzenter eingesetzt. Gemäß den Fign. 3 und 4 wird der Exzenter von einem Antriebsmotor 40 über einen Riemen 41 angetrieben, der ein Riemenrad 42 betätigt, das zentrisch zur Exzenterwelle 34 angeordnet ist. Die Exzenterwelle 34 ist am weiteren Abstützelement 31 gelagert und bei Betätigung der zweiten Einrichtung 30 führt die exzentrische Lagerung dazu, daß sich ein Exzenterlager 44, an dem eine Lasche 35 als Übertragungselement angeordnet ist, in Schließrichtung bewegt. Die Lasche 35 selbst wiederum ist über einen Gelenkbolzen 39 mit dem Ansatz 13c des ersten Abstützelements verbunden. Der zur Aufbringung der Schließkraft bei geschlossener Gießform 33 erforderliche, nur noch geringe Verformungsweg, hervorgerufen durch die Verformung der gesamten Formschließeinheit, kann so durch den Exzenter leicht aufgebracht werden.

Die erste Einrichtung ist ein elektromechanisch angetriebener Spindelmechanismus . Im Ausführungsbeispiel werden als Spindeln 16 zwei Kugelrollspindeln bevorzugt, da dadurch die großen Rückdrehmomente bei Werkzeugzuhaltung sich zum Teil wieder aufheben und hierdurch die Führungssysteme weniger belasten. Auch der Einsatz von Gewindespindeln ist möglich. Die Spindel 16 wirkt mit einer Mutter 14 zusammen, die über ein Stützelement 37 in der Formschließeinheit abgestützt ist. Das Stützelement 37 ist über Zuganker 38 mit dem beweglichen Formträger 11 verbunden. Die Zuganker 38 spannen Rohre 46 zwischen dem Stützelement 37 und dem beweglichen Formträger ein. Dadurch wird eine in sich steife und leicht zu führende Bewegungseinheit 47 aus diesen Teilen gebildet. Dies erhöht die Führungsgenauigkeit, insbesondere aufgrund des in Schließrichtung gemessenen Abstandes zwischen dem beweglichen Formträger und dem Stützelement. Dieser Abstand ist abhängig vom Spindelhub, so daß bei größeren Maschinen auch die Länge der Bewegungseinheit und damit die Abstützung verbessert wird. Dies erhöht aber die Präzision der gesamten Formschließeinheit. Die Länge der Bewegungseinheit wird vor allem durch die Rohre 46 bestimmt, die die Spindel 16 aufnehmen, und damit ebenso vom Spindelhub. Der Antrieb der Spindeln 16 - es kann auch nur eine vorgesehen sein - erfolgt über einen Antriebsmotor 15, auf dessen Motorwelle 15a zwei Riemen 22, 23 angetrieben werden, die Riemenräder 20, 21 antreiben, die Riemenräder 20,21 antreiben. Zur Geräuschreduzierung und Verringerung der Maschinenlänge kann alternativ ein Getriebe vorgesehen werden.

Um bei Aufbringen der Schließkraft ein Rückdrehen der Spindel 16 zu vermeiden, sind Blockiermittel 17 vorgesehen. Die Blockiermittel 17 umfassen eine Blockierscheibe 17a, die an der Achse 16a der Spindel 16 über Schrumpfmittel 43 aufgeschrumpft ist. Die Achse 16a selbst ist über Lager 50 gelagert und gegen die Kraft elastischer Rückstellmittel 18 in Längsrichtung der Spindel beweglich. Beim Aufbringen der Schließkraft kommt die Blockierscheibe 17a mit dem ersten Abstützelement 13 in Berührung. Die Blockierscheibe 17a besitzt einen sich in Längsrichtung der Spindel 16 erstreckenden umlaufenden Ring 17b, der beim Blockiervorgang mit einem entgegengesetzt gerichteten ringförmigen Vorsprung 19a eines Lagerrings 19 in kraftschlüssige Verbindung gelangt. Ring 17b und ringförmiger Vorsprung 19a können ggf. zum Aufbau einer formschlüssigen Verbindung auch verzahnt sein. Der Lagerring 19 ist über Bolzen 32 mit dem Ansatz 13c verbunden, wobei diese beiden Elemente zwischen sich die Lagerung für die Achse 16a aufnehmen. Im Ausführungsbeispiel ist die Blockierscheibe gleichzeitig die Nabe des Riemenrades 20, 21.

Der Abstand b zwischen dem Ring 17b der Blockierscheibe 17a und dem ringförmigen Vorsprung 19a des Lagerringes 19 ist bei geschlossener Gießform und vor Aufbringen der Schließkraft kleiner als z.B. die Exzentrizität 2edes Exzenters.

Die Betätigung erfolgt grundsätzlich so, daß zunächst über die Spindel 16 die Gießform 33 geschlossen wird. Sobald die Hälften der Gießform in Anlage kommen, stellt sich der Abstand b ein. Sodann wird die zweite Einrichtung geschaltet, wobei zunächst der Abstand b beseitigt wird. Zu diesem Zeitpunkt muß der Antriebsmotor 15 noch arbeiten, damit ein Rückdrehen verhindert wird. Sobald jedoch der Abstand b überwunden ist, stellt sich aufgrund der kraftschlüssigen Verbindung eine Blockierung der Spindel 16 ein, so daß während des weiteren Aufbringens der Kraft die Blokkiereinrichtung nur noch ein Druckelement ist, das in den Kraftfluß integriert ist. Die Lager sind somit nur noch mit der Kraft der Tellerfedern beaufschlagt, die so stark eingestellt sind, daß bei Bewegen des Formträgers noch kein Blockieren möglich ist und dieses sich erst dann einstellt, wenn die zweite Einrichtung zugeschaltet wird. Die Blockiereinrichtung wird vorzugsweise so ausgebildet, daß es nicht zu einem Gleiten zwischen Blockierscheibe 17a und dem Lagerring 19 kommt. Bis zur Anlage der beiden Teile infolge der Betätigung der zweiten Einrichtung, 30 zur Aufbringung der Schließkraft wird daher der Antriebsmotor betrieben, so daß die beiden Teile im Ruhezustand, also bei ruhender Blockierscheibe, aufeinandertreffen und dann die kraftoder formschlüssige Verbindung eingehen.

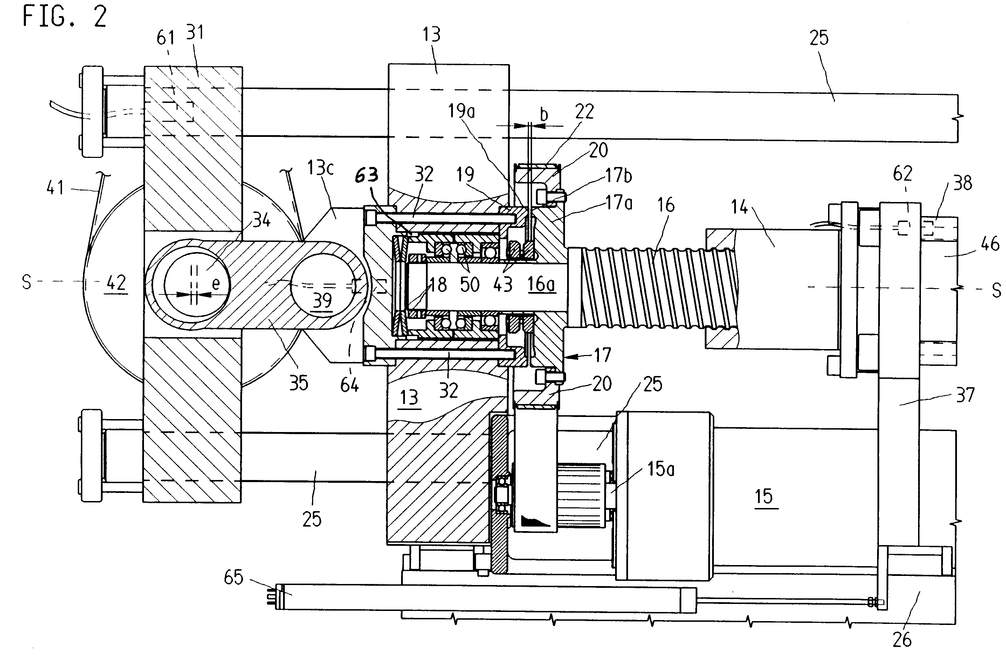

Die gesamte Formschließeinheit ist weitgehend symmetrisch zu einer vertikalen Mittel ebene aufgebaut. In dieser Ebene liegt auch der Antriebsmotor 15. Die beiden Riemenräder der ersten Einrichtung sind in Schließrichtung s-s gegeneinander versetzt (Fig. 2). Die symmetrische Anordnung insbesondere bei zwei Spindeln hat den Vorteil, daß zwischen den beiden Spindeln bedarfsweise eine Auswerfereinheit vorgesehen werden kann. Am stationären Formträger ist eine Durchtrittsöffnung 12a vorgesehen, durch die eine Spritzgießeinheit an den Formhohlraum der Spritzgießform 33 heranführbar ist.

Die zweite Einrichtung zur Aufbringung der Schließkraft läßt auch eine Regelung der Schließkraft zu. So können einerseits die Formhälften zunächst in Anlage gebracht werden (entsprechend einem Spaltmaß c = 0 in Fig. 1 bei dem dort gestrichelt eingezeichneten Formschluß), und die zweite Einrichtung, 30 wird dann über ein bestimmtes Maß betätigt, so daß damit eine bestimmte gewünschte, voreinstellbare Zuhaltekraft aufgebaut wird. Dies ist insbesondere dann erwünscht, wenn Spritzgießformen 33 sich in der Maschine befinden, die nicht mit der vollen Kraft der Formschließeinheit beaufschlagt werden dürfen oder sollen.

Andererseits kann auch ein Spritzprägen z.B. dadurch realisiert werden, daß die Formhälften zunächst auf ein beliebiges Spaltmaß c zusammengefahren werden und dann die zweite Einrichtung die Formschließeinheit in ihre Endlage überführt. Auch dadurch kann die maximal aufbringbare Kraft nach oben begrenzt werden.

Die Regelung erfordert verschiedene Hilfsmittel zur Ermittlung der Regelparameter, und hierzu kann z.B. zur Lagebestimmung des beweglichen Formträgers ein Servomotor mit Absolutweg-Meßsystem vorgesehen werden. Bei Verwendung eines Motors mit inkrementaler Wegmessung werden zusätzlich separate, parallel zur Spindelachse montierte Linearpotentiometer 65 verwendet, die die aktuelle Lage des beweglichen Formträgers sicher melden. Aber auch die richtige Schließkraft kann mittels Kraftmeßbolzen als Sensor 61 in den Holmen nachgeregelt werden. Die Kraftmeßbolzen oder Druckmeßdosen können jedoch an beliebiger Stelle innerhalb des Kraftflusses angeordnet sein, wie z.B. beim Exzenter innerhalb des Gelenkbolzens 39 als Sensor 64.

Die Aufspaltung der Formschließbewegung in eine von der ersten Einrichtung hervorgerufene Bewegung des beweglichen Formträgers 11 bis zur Anlage am stationären Formträger 12 und in eine Aufbringung der Schließkraft durch die zweite Einrichtung, 30 erlaubt den zweckorientierten Einsatz von derartigen Meßeinrichtungen, wie Kraftsensoren. Da die erste Einrichtung 10 während des Formschlusses aus dem Kraftfluß ausgekoppelt ist, kann dieser Einrichtung ein empfindlicher, hochauflösender Sensor in direktem Kraftfluß zugeordnet werden. Eine Anordnung des Kraftsensors 63 zur Erfassung der bei der Bewegung des beweglichen Formträgers 11 auftretenden Kraft Fs empfiehlt sich dabei zwischen erstem Abstützelement 13 und erster Einrichtung 10 vorzugsweise im Bereich der Achse 16a der Kugelrollspindel 16, so daß bei Abbau des Abstandes b auch der Kraftsensor 63 aus dem Kraftfluß herausgenommen ist. Dadurch läßt sich die Zufahrkraft so genau erfassen, daß bereits geringste Störungen bemerkbar werden, was zugleich die Lebensdauer des gesamten Systems erhöht.

In Verbindung mit der zweiten Einrichtung, 30 können im Kraftfluß vorzugsweise an dem Gelenkbolzen 39, an dem die zweite Einrichtung angelenkt ist, und/oder am Kraftübertragungselement 25 in Form von als Kraftmeßbolzen ausgebildeten Kraftsensoren 61 und/oder an der Lagerung der Mutter 14 der Kugelrollspindel 16 wenigstens ein weiterer Kraftsensor 61, 62, 64, zumindest zur Erfassung der nach Anlage der Teile der Gießform 33 auftretenden Kräfte vorgesehen sein. Insbesondere bei Verwendung eines Motors ohne inkrementale Wegmessung ist gemäß Fig. 2 ein Linearpotentiometer 65 vorgesehen.

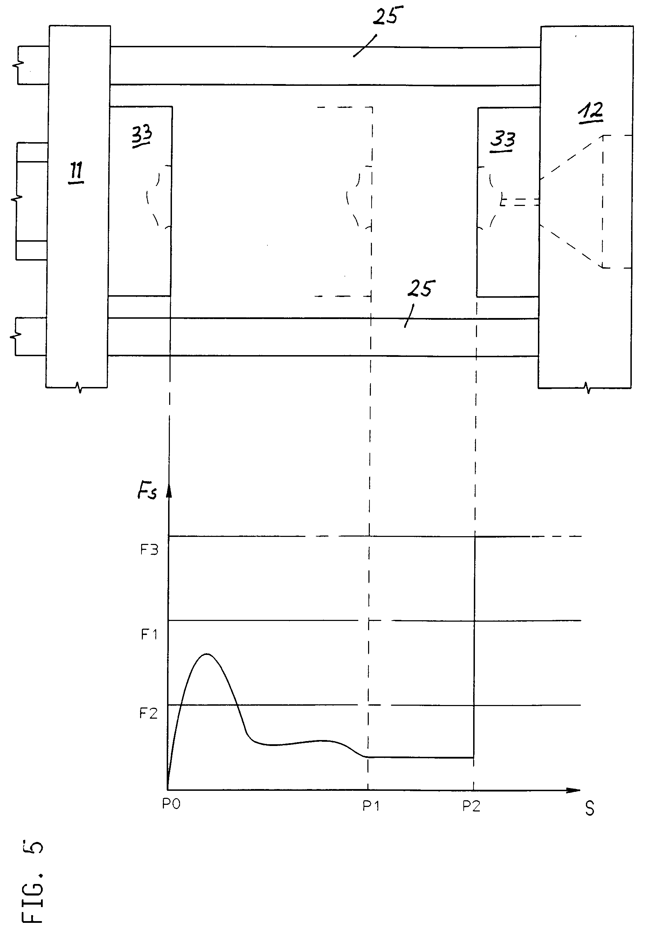

Eine derartig ausgestattete Formschließeinheit kann gemäß den Fign. 5-10 wie folgt betrieben werden. Zunächst verdeutlicht Fig. 5 den Verlauf der Kraft während der Formschlußbewegung. Aufgezeichnet ist die benötigte tatsächliche Kraft Fs, die vorzugsweise am Kraftsensor 63 während der Bewegung des beweglichen Formträgers 11 bis zur Anlage am stationären Formträger 12 meßbar ist. Ausgehend von einer Nulllage P0 vor Beginn der Formschlußbewegung steigt die erfaßte Kraft Fs entlang des Weges s bis zum Formschluß zunächst an. Diese Erhöhung der Kraft beruht darauf, daß die Masse des Formträgers bewegt werden muß und zu Beginn Reibkräfte überwunden werden müssen. Nachdem dieser anfängliche Kraftanstieg erfolgt ist, sinkt während der Bewegung die Kraft auf die Gleitreibkräfte ab, wobei kurz vor der Anlageposition P2 ein Formschutzbereich erreicht wird, der seinen Startpunkt bei P1 hat. Dieser Bereich wird normalerweise mit geringer Geschwindigkeit und geringer Kraft durchfahren, um eine Zerstörung der Gießform 33 zu vermeiden. Sobald der Formschutzbereich durchfahren ist und die Teile der Gießform in Anlage kommen, ist die Anlageposition P2 erreicht, wobei bei weiterer Betätigung der ersten Einrichtung die vorbestimmte Anlagekraft F3 erreicht wird. Die Spritzgießmaschine wird dabei so betrieben, daß die erste Einrichtung keine höhere Kraft als F3 aufbringen kann, was durch entsprechende Einstellung der Rückstellmittel 18 zu verwirklichen ist.

Mit dem im Kraftfluß der ersten Einrichtung integrierten Kraftsensor 63 läßt sich nun zunächst eine Zufahrkraftregelung ermöglichen, wobei die Verwendung eines hochauflösenden Sensors im direkten Kraftfluß eine sehr genaue Rückmeldung der Werkzeugsicherungs- oder Formschutzkraft ermöglicht. Dies kann wiederum die Voraussetzung zur Erzielung einer vorgegebenen Anlagekraft F3 schaffen, um auf dieser Kraft aufbauend eine durch die zweite Einrichtung erzeugte exakte Anpreßkraft F4 und damit eine Steuerung der Zuhaltekraft genau wiederholbar von Zyklus zu Zyklus unter Kompensation von Wärmeausdehnung zu erzielen.

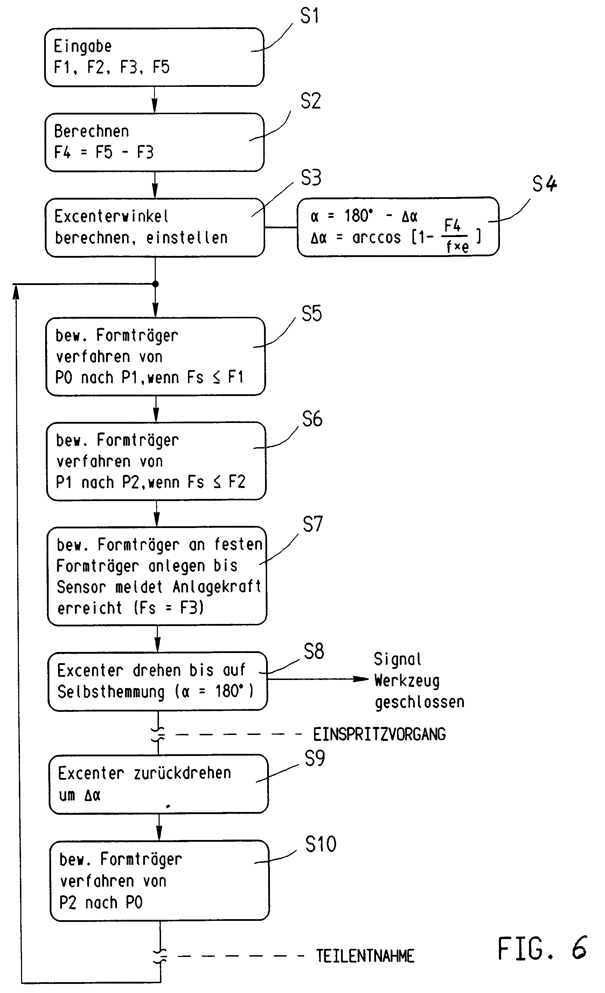

Fig. 6 verdeutlicht nun den Verfahrensablauf während der Zufahrkraftregelung und Zuhaltekraftsteuerung. Mit dem Exzenterantrieb lassen sich hier durch kleinste Winkelveränderungen am ehesten exakte Schließkraftsteuerungen verwirklichen. Im Schritt S1 werden zunächst folgende Werte eingegeben oder aus Speicherwerten der Spritzgießeinheit gelesen

- Kraft F1 als maximal zulässige Kraft während der Bewegung des beweglichen Formträgers 11
- Formschutzkraft F 2 als maximal zulässige Kraft im Formschutzbereich
- Anlagekraft F3 als von der ersten Einrichtung aufzubringende Kraft bei Anlage der Teile der Gießform 33
- F5 als maximale oder vorgegebene Schließkraft der Spritzgießmaschine.

Aus der Schließkraft F5 und der Anlagekraft F3 läßt sich dann die von der zweiten Einrichtung, also vorzugsweise vom Exzenterantrieb E zu erzeugende Anpreßkraft F4 berechnen (Schritt S2). Bereits ohne Berechnung der Anpreßkraft F4 läßt sich jedoch schon die in Fig. 5 dargestellte Zufahrkraftregelung gemäß den Schritten S5, S6 und S7 verwirklichen.

Während der Bewegung des beweglichen Formträgers wird kontinuierlich die Kraft Fs am Kraftsensor 63 gemessen. Die erfaßte Kraft Fs wird dann mit der vorgegebenen maximal zulässigen Kraft F1 verglichen, und ein Abbruch des Formschlusses erfolgt dann, wenn die erfaßte Kraft Fs größer ist als die vorgegebene maximal zulässige Kraft F1. Dieser Vergleich erfolgt im Bereich von der Nullage P0 bis wenigens zu einem Startpunkt P1 kurz vor der Anlageposition P2 für den Formschutzbereich. Bedarfsweise kann sie jedoch, falls von einer Formschutzphase Abstand genommen wird, bis zur Anlageposition P2 fortgesetzt werden (Schritt S5). Sobald der Startpunkt P1 des Formschutzbereiches erreicht ist, wird während der weiteren Bewegung des beweglichen Formträgers kontinuierlich überprüft, ob die erfaßte Kraft Fs kleiner oder gleich der Formschutzkraft F2, die üblicherweise kleiner ist als die maximal zulässige Kraft F1. Sobald die erfaßte Kraft Fs die Formschutzkraft F2 übersteigt, erfolgt ein Abbruch des Schließvorgangs (Schritt S6). Sobald die Anlageposition erreicht ist, wird dann von der ersten Einrichtung 10 die Anlagekraft F 3 aufgebracht (Schritt S7).

Die Vorgabe von F1 und F2 ist nur eine Möglichkeit, da diese Kräfte auch auf andere Art und Weise ermittelt werden können. Beispielsweise kann bei einem ersten Spritzzyklus die Kraft gemessen und gespeichert werden und dazu ein Toleranzband festgelegt werden zur Steuerung bzw. Überwachung der Formschutzphase in nachfolgenden Schließbewegungen, oder zur laufenden Korrektur des Kraftverlaufs kann, basierend auf einer oder mehreren unmittelbar vorangegangenen Kraftverlaufsmessungen, ein mit einem Toleranzband versehener Soll-Verlauf festgelegt werden.

Um nun im Anschluß an die Zufahrkraftregelung eine Zuhaltekraftsteuerung zu ermöglichen, muß im Schritt S3 ein Exzenterwinkel berechnet werden und vor Beginn des Schließzyklus auch eingestellt werden. Dies ist erforderlich, da angestrebt ist, daß der Exzenterantrieb E bei Erreichen der Schließkraft F5 möglichst immer in Strecklage ist, sich somit also an seinem Totpunkt befindet. Aus diesem Grunde wird zunächst der Ergänzungswinkel $\alpha$ zu Restwinkel $\Delta\alpha$ berechnet, von dem aus der Exzenter später zu drehen startet, nachdem die Teile der Gießform 33 mit der Kraft F3 angelegt wurden.

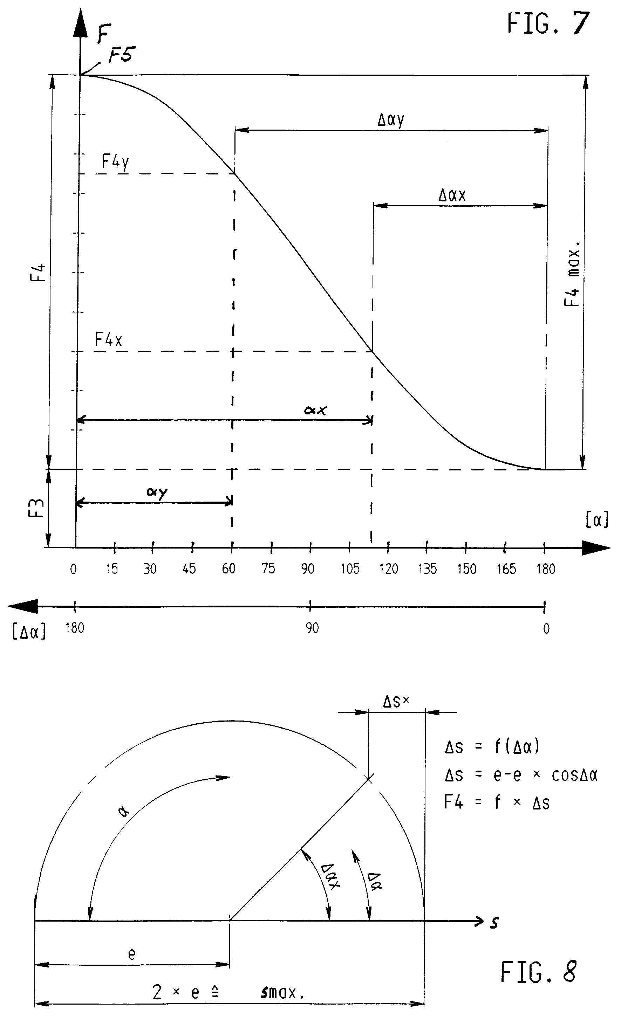

Fig. 7 zeigt hier den Zusammenhang zwischen dem Ergänzungswinkel $\alpha$ und der erreichbaren Schließkraft F 5. Wird der Ergänzungswinkel $\alpha$ beispielsweise 0 gesetzt, so hat man den vollen Hub s max mit der zweifachen Exzentrizität e des Exzenterantriebs, um die durch den Exzenterantrieb aufbringbare Kraft F4 aufzubringen. Da vor der zweiten Einrichtung die erste Einrichtung betätigt wird, wird hiermit auch die Schließkraft F5 bestimmt zur Summe aus der Anlagekraft F3 zuzüglich der Anpreßkraft F4 des Exzenterantriebs E. Wird die Schließkraft F5 vom Anwender kleiner gewählt, so wird auch die Anpreßkraft F4 und der Restwinkel $\Delta\alpha$ kleiner; hierdurch wird der Ergänzungswinkel $\alpha$, der zugleich der Startwinkel des Exzenterantriebs E ist größer und damit der Weg $\Delta$s kleiner. Bei einem Restwinkel $\Delta\alpha$ von 180° ergibt sich die maximale Anpreßkraft F4 max. Wird z.B. jedoch lediglich eine Anpreßkraft F4y oder F4x vorgegeben, so ergibt sich aufgrund der Cosinuskurve in Fig. 7 ein Ergänzungswinkel $\alpha$y bzw. $\alpha$x, der voreingestellt werden kann, damit beim Aufbringen der Kraft sich der Exzenterantrieb in Strecklage befindet.

Somit verbleibt zum Aufbringen der Kraft ein Restwinkel von $\Delta$y bzw. $\Delta$x. Dies ist auch in Fig. 8 nochmals verdeutlicht, bei einem bestimmten $\Delta\alpha$x ergibt sich nun hieraus ein $\Delta$sx, nach der Formel

$$\Delta s = e - e \times \cos \Delta\alpha$$

Zur Aufbringung der Anpreßkraft

$$F4 = f \times \Delta s.$$

$\Delta$s ist dabei der verbleibende Verformungsweg, der erforderlich ist, um die Anpreßkraft aufzubringen, die sich aus verbleibendem Verformungsweg mal Federsteifigkeit f des Gesamtsystems ermitteln läßt. Die Federsteifigkeit der Spritzgießmaschine läßt sich dabei problemlos bei der Maschinenabnahme ermitteln und in einem Speicher in der Steuerung ablegen. Die Steifigkeit des Werkzeuges ist zunächst zwar unbekannt, kann jedoch durch die bekannte Einbauhöhe im Einsatzfall zur Berechnung der Gesamtsteifigkeit f herangezogen werden unter der vereinfachten Annahme eines Normwerkzeuges. Dies führt somit zu dem vom Exzenterantrieb aufzubringenden Restwinkel gemäß der Formel:

$$\Delta\alpha = \arccos (1 - F4/(f \times e))$$

mit:

F4 = Anpreßkraft
f = Federsteifigkeit
e = Exzentrizität des Exzenterantriebs E.

Anhand dieser Formel läßt sich also insofern der Restwinkel $\Delta\alpha$ berechnen und somit der Ergänzungswinkel $\alpha$ vorab einstellen (Schritt S4).

Nachdem dann also die Zufahrkraftregelung stattgefunden hat und die Anlagekraft F3 aufgebracht ist, wird der Exzenterantrieb mit dem Restwinkel gemäß Schritt S8 bis zur Selbsthemmung bei $\alpha$ = 180° gedreht, was zum Signal für die Steuerung führt, daß das Werkzeug geschlossen ist. Sodann findet in bekannter Weise ein Einspritzvorgang statt. Nachdem die Spritzgußmasse eingespritzt wurde, das Formteil geformt ist und die Form abgekühlt ist, wird der Exzenter jetzt gemäß Schritt S9 nicht vollständig zurückgedreht, sondern lediglich so weit, daß beim nächsten Spritzzyklus durch eine Drehung um den Restwinkel $\Delta\alpha$ genau die gleiche Zuhaltekraft angesteuert werden kann. Da sich beim Zurückdrehen um den Restwinkel $\Delta\alpha$ wiederum lediglich die Anlagekraft F3 einstellt, kann nun die erste Einrichtung betätigt werden und verfährt den beweglichen Formträger aus der Anlageposition P2 bis zur Nullage P0, die die Teilentnahme erlaubt. Sodann kann der nächste Zyklus beginnen.

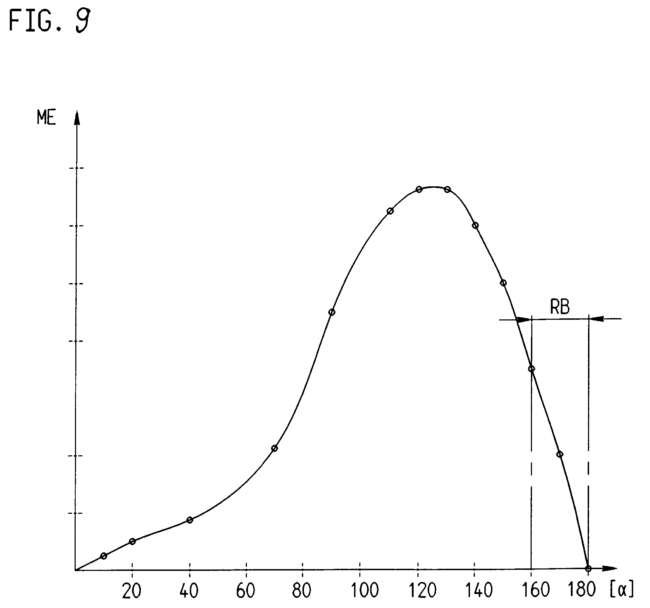

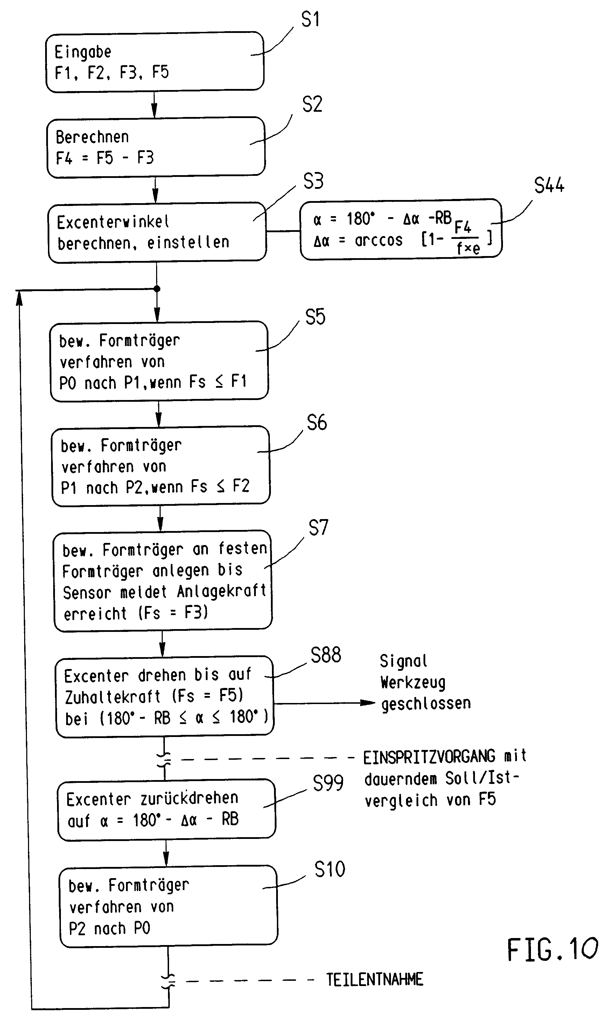

In den Fign. 9 und 10 wird nun ergänzend oder alternativ eine Zuhaltekraftregelung erläutert. Während bisher die Zuhaltekraft lediglich nach Anlage der Gießform 33 mit einem festen vorgegebenen Wert aufgebracht wurde, kann jetzt die Schließkraft F5 auch während der Anpreßzeit ausgeregelt werden und nicht nur von Zyklus zu Zyklus nachgeregelt werden. Hierbei macht man sich insbesondere die hohe Kraftübersetzung des Exzenterantriebs E in seiner unteren Totlage, also in der Strecklage zunutze, da durch relativ große Winkeländerungen kleine Zuhaltekraftabweichungen selbst während der Einspritz- und Nachdruckphase mit geringem Energieaufwand ausgeregelt werden können. Dies verdeutlicht insbesondere Fig. 9. Aufgetragen ist dabei das vom Exzenterantrieb E aufgebrachte Exzentermoment ME über dem Ergänzungswinkel α. Wird hierbei ein Regel bereich RB kurz vor der Totlage vorgesehen, so verdeutlicht die Steigung, mit welchen Mitteln hier eine Regelung erfolgen kann. Man versucht dabei, den Regel bereich RB in einem Bereich unterhalb von 50% des maximalen Exzentermomentes ME zu halten, was jedoch ungefähr einer Winkelauslenkung von 20° entspricht. Um den Energieverbrauch zu senken, sollte der Regel bereich RB jedoch möglichst klein gehalten werden und möglichst nahe an den Wert α = 180° herankommen.

Im Verfahrensablauf der Fig. 10 für die Zuhaltekraftregelung wurden gleiche Schritte zunächst mit gleichen Bezugszeichen versehen. Hinsichtlich der hier ebenfalls möglichen Zufahrkraftregelung kann daher auf die Ausführungen bezüglich der Schritte S1, S5, S6 und S7 verwiesen werden. Im Bereich der Zuhaltekraftregelung ist es nun erforderlich, zunächst im Schritt S1 die Anlagekraft F3, die Schließkraft F5 und einen Regel bereich RB vorzugeben oder aus einem Speicher zu lesen. In Schritt S2 wird die auf den Exzenterantrieb E entfallende Anpreßkraft F4 durch Subtraktion der Anlagekraft F3 von der Schließkraft F5 ermittelt. Sodann wird anhand der bekannten Formel zunächst der für die Anpreßkraft F4 erforderliche Verformungsweg Δs berechnet, den der Exzenterantrieb E nach Aufbringen der Anlagekraft F3 aufbringen muß, und um den Weg s für den Regelbereich RB erhöht. Mit diesen Vorgaben kann dann in Schritt S44 der Restwinkel Δα ermittelt werden, um den der Exzenterantrieb E zu drehen ist, um den Weg Δs und den maximalen Regel bereich RB zurückzulegen. Noch vor dem ersten Spritzzyklus wird dann der Ergänzungswinkel zum Restwinkel Δα berechnet und der Exzenterantrieb E zur Einstellung des Ergänzungswinkels α betätigt. In den folgenden Spritzzyklen wird nun zunächst die Anlagekraft F3, wie im Schritt S7 angegeben, mit der ersten Einrichtung 10 aufgebracht. Anschließend wird die Schließkraft F5 unter Betätigung des Exzenterantriebs E aufgebaut. Dies erfolgt gemäß Schritt 88 durch Drehen des Exzenterantriebs E, bis sich die Schließkraft F5 bei einem Ergänzungswinkel von

$$180° - RB \leq α \leq 180°$$

einstellt. Ist die Schließkraft F5 aufgebaut, erhält die Steuerung das Signal "Werkzeug geschlossen" und führt im folgenden einen bekannten Einspritzvorgang durch. Während des Einspritzvorgangs wird kontinuierlich die tatsächliche Schließkraft erfaßt und mit der gewünschten Schließkraft F5 zur Ermittlung einer Stellgröße für den Exzenterantrieb verglichen. Aufgrund der Stellgröße erfolgt dann eine Regelung des Exzenterantriebs E innerhalb des Regelbereichs RB.

Nach jedem Spritzzyklus wird zunächst die zweite Einrichtung in Schritt S99 auf den in Schritt S3 berechneten Ergänzungswinkel α zurückgedreht und sodann in Schritt 10 die Anlagekraft F3 abgebaut und die Gießform zur Teilentnahme mittels der ersten Einrichtung 10 geöffnet.

Auch hier kann nun allerdings mit den im Kraftfluß der zweiten Einrichtung vorgesehenen Kraftsensoren 61, 62, 64 eine Zufahrkraftregelung durchgeführt werden, wobei es jedoch nicht auf die exakte Auflösung und Voreinstellung der Anlagekraft ankommt, da ja die Schließkraft F5 selbst geregelt ist. Insofern ist hier ein Kraftsensor im Kraftfluß der ersten Einrichtung nicht zwingend erforderlich.

In beiden Verfahren kann die Anlagekraft F3 z.B. zum Spritzprägen auch zu Null gesetzt werden. Um ferner eine möglichst wirtschaftliche Betriebsweise zu ermöglichen, kann ein lernendes System z.B. auch nach einer gewissen Einregelzeit den Regel bereich RB minimieren, damit sich der Exzenterantrieb möglichst in Strecklage befindet.

**Patentansprüche**

1. Formschließeinheit für eine Spritzgießmaschine zur Verarbeitung von Kunststoffen, keramischen Massen und dergleichen mit

   - einem stationären Formträger (12),
   - einem beweglichen Formträger (11), der zwischen sich und dem stationären Formträger (12) einen Formspannraum (S) zur Aufnahme einer Gießform (33) ausbildet,
   - einer ersten Einrichtung (10) zur Bewegung des beweglichen Formträgers (11) auf den stationären Formträger (12) zu und von diesem weg,
   - einer zweiten nach der ersten Einrichtung, während des Formschlusses der Gießform (33) betätigbaren Einrichtung (24,30) zur Aufbringung der Schließkraft,
   - einem ersten Abstützelement (13) zur Abstützung zumindest der ersten Einrichtung (10), das durch Kraftübertragungsmittel (25) mit dem stationären Formträger (12) in Verbindung steht,
   - wobei die erste Einrichtung (10) die Teile der Gießform (33) bereits bis etwa zur Anlage bringt, während die zweite Einrichtung (30) bei Betätigung die erste Einrichtung (10) mit erstem Abstützelement (13) und beweglichem Formträger (11) beaufschlagt und hauptsächlich zur Aufbringung der Schließkraft vorgesehen ist,

dadurch gekennzeichnet, daß die zweite Einrichtung (30) zur Aufbringung der Schließkraft ein vorzugsweise elektromechanisch angetriebener Exzenter ist, dessen Exzenterwelle (34) die erste Einrichtung beaufschlagt.

2.  Formschließeinheit nach Anspruch 1, dadurch gekennzeichnet, daß die erste Einrichtung (10) zur Bewegung des beweglichen Formträgers (11) wenigstens eine Spindel (16) aufweist, die bei Aufbringen der Schließkraft durch Blockiermittel (17) selbsttätig blockierbar ist.

3.  Formschließeinheit nach Anspruch 2, dadurch gekennzeichnet, daß als Blockiermittel (17) eine Blockierscheibe (17a) an der Achse (16a) der Spindel (16) vorgesehen ist, die gegen die Kraft eines elastischen Rückstellmittels (18) mit dem ersten Abstützelement (13) in Verbindung kommt.

4.  Formschließeinheit nach Anspruch 2 oder 3, dadurch gekennzeichnet, daß die Blockierscheibe (17a) eine sich in Längsrichtung der Spindel (16) erstreckenden umlaufenden Ring (17b) aufweist, der beim Blockiervorgang mit einem entgegengesetzt gerichteten ringförmigen Vorsprung (19a) eines Lagerrings (19) in kraftschlüssige Verbindung gelangt.

5.  Formschließeinheit nach Anspruch 4, dadurch gekennzeichnet, daß der Abstand (b) zwischen dem Ring (17b) der Blockierscheibe (17a) und dem ringförmigen Vorsprung (19a) des Lagerrings (19) bei geschlossener Gießform vor Aufbringen der Schließkraft kleiner ist als die Exzentrizität (e) des Exzenters.

6.  Formschließeinheit nach einem der vorhergehenden Ansprüche, dadurch gekennzeichnet, daß eine Steuervorrichtung für ein serielles Schließsystem mit der ersten Einrichtung (10) und der zweiten Einrichtung (30) vorgesehen ist, wobei die erste Einrichtung (10) einen elektromotorischen Antrieb mit einer Formschutzsteuerung für die Formschutzphase der Gießform (33) aufweist, und daß die Steuervorrichtung eine vorzugsweise als Kraftsensor (63) ausgebildete Meßeinrichtung zur Erfassung der bei der Bewegung des beweglichen Formträgers (11) auftretenden Kraft (Fs) aufweist, die vorzugsweise zwischen erstem Abstützelement (13) und erster Einrichtung (10) vorgesehen ist.

7.  Formschließeinheit nach einem der vorhergehenden Ansprüche, dadurch gekennzeichnet, daß im Kraftfluß vorzugsweise am Gelenkbolzen (39) und/oder am Kraftübertragungselement (25) und/oder an der Lagerung der Mutter (14) der Kugelrollspindel (16) wenigstens ein weiterer Kraftsensor (61,62,64) zumindest zur Erfassung der nach Anlage der Teile der Gießform (33) auftretenden Kräfte und das bedarfsweise an den Linearpotentiometer (65) zur Erfassung der Lage des beweglichen Formträgers (11) vorgesehen sind.

8.  Verfahren zum Betreiben einer Formschließeinheit nach einem der Ansprüche 1 bis 7, gekennzeichnet durch die Schritte

    -   Vorgeben einer maximal zulässigen Kraft (F1) zum Bewegen des beweglichen Formträgers (11) und einer von der ersten Einrichtung (10) zu erbringenden Anlagekraft (F3) bei Anlage der Teile der Gießform (33),
    -   Erfassen der Kraft (Fs) während des Bewegens des beweglichen Formträgers (11) aus einer Nullage (P0) bis zur Anlageposition (P2) der Gießform (33) mittels einer vorzugsweise als Kraftsensor (63) ausgebildeten Meßeinrichtung, die während der Aufbringung der Anpreßkraft (F4), die zusammen mit der Anlagekraft (F3) die Schließkraft (F5) bildet, durch die zweite Einrichtung (30) aus dem Kraftfluß ausgekoppelt ist,
    -   Vergleich der erfaßten Kraft (Fs) mit der vorgegebenen maximal zulässigen Kraft (F1) und Abbruch der Formschlußbewegung, wenn die erfaßte Kraft (Fs) größer ist als die maximal zulässige Kraft (F1).

9.  Verfahren nach Anspruch 8, gekennzeichnet durch die Schritte

    -   Vorgeben eines Formschutzbereiches beginnend an einem Startpunkt (P1) kurz vor der Anlageposition (P2) und endend an der Anlageposition (P2),
    -   Vorgabe einer Formschutzkraft (F2), die kleiner als die maximal zulässige Kraft (F1) ist, als Grenzwert für die erfaßte Kraft (Fs) im Formschutzbereich,
    -   Vergleich der erfaßten Kraft (Fs) mit der Formschutzkraft (F2) und Abbruch der Formschlußbewegung, wenn die erfaßte Kraft (Fs) größer ist als die Formschutzkraft (F2).

10. Verfahren nach Anspruch 8 oder 9, gekennzeichnet durch die Schritte

    -   Vorgabe einer gewünschten Schließkraft (F5) sowie Ermittlung der auf die zweite Einrichtung (30) entfallenden Anpreß kraft (F4) durch Subtraktion der Anlagekraft (F3) von der Schließkraft (F5),

- Berechnung des für die Anpreßkraft (F4) erforderlichen Wegs (Δs) der zweiten Einrichtung (30) nach Aufbringen der Anlagekraft (F3) unter Berücksichtigung der Federsteifigkeit (f) des Gesamtsystems,
- gesteuertes und von Zyklus zu Zyklus wiederholbares Aufbringen der Anpreßkraft (F4) durch die zweite Einrichtung (30) nach Aufbringen der Anlagekraft (F3) zur Erzeugung der gewüschten Schließkraft (F5).

11. Verfahren nach einem der Ansprüche 8 bis 10, gekennzeichnet durch die Schritte

- Berechnen des Restwinkels (Δα), um den der Exzenterantrieb (E) bis zur Selbsthaltung zu drehen ist, damit sich der für die Aufbringung der Anpreßkraft (F4) erforderliche Weg (Δs) einstellt,
- Berechnen des Ergänzungswinkels (α) zum Restwinkel (Δα),
- Betätigung des Exzenterantriebs (E) zur Einstellung des Ergänzungswinkels (α),
- Durchführung wenigstens eines Spritzzyklus mit den Schritten:
- Schließen der Gießform (33) und Aufbringen der Anlagekraft (F3) mittels der ersten Einrichtung (10),
- Aufbringen der Schließkraft (F5) durch Betätigung des Exzenterantriebs (E) durch Drehen der Exzenterwelle (34) um den Restwinkel (Δα),
- Einspritzen einer plastifizierten Masse zur Herstellung eines Spritzlings in bekannter Weise,
- Abbau der Anpreßkraft (F4) durch Zurückdrehen des Exzenterantriebs um den Restwinkel (Δα),
- Abbau der Anlagekraft (F3) und Öffnen der Gießform (33) mittels der ersten Einrichtung (10) zur Teilentnahme.

12. Verfahren zum Betreiben einer Formschließeinheit nach einem der vorhergehenden Ansprüche 1 bis 7, gekennzeichnet durch die Schritte:

- Vorgeben einer von der ersten Einrichtung (10) aufzubringenden Anlagekraft (F3) bei Anlage der Teile der Gießform (33),
- Vorgeben einer vorbestimmten Schließkraft (F5),
- Berechnung der auf den Exzenterantrieb (E) entfallenden Anpreßkraft (F4) durch Subtraktion der Anlagekraft (F3) von der Schließkraft (F5),
- Vorgeben eines Regelbereichs (RB), innerhalb dessen der Exzenterantrieb (E) unterhalb der durch die Totlage des Exzenterantriebs (E) bestimmten Selbsthaltung zur Regelung der Schließkraft regelbar ist,

- Berechnung des für die Anpreßkraft (F4) erforderlichen Weges (Δs), den der Exzenterantrieb (E) nach Aufbringen der Anlagekraft (F3) aufbringen muß und Erhöhung dieses Weges (Δs) um den Regel bereich (RB),
- Berechnen des Restwinkels (Δα), um den der Exzenterantrieb zu drehen ist, um den Weg (Δs) und den Regelbereich (RB) zurückzulegen,
- Berechnen des Ergänzungswinkels (α) zum Restwinkel (Δα) und Betätigen des Exzenterantriebs (E) zur Einstellung des Ergänzungswinkels (α),
- Durchführung wenigstens eines Spritzzyklus mit den Schritten:

  - Aufbringen der Anlagekraft (F3) mit der ersten Einrichtung (10),
  - Aufbau der Schließkraft (F5) unter Betätigung des Exzenterantriebes (E),
  - Einspritzen einer plastifizierbaren Masse in die Gießform zur Herstellung eines Spritzlings in bekannter Weise,
  - kontinuierliches Erfassen der tatsächlichen Schließkraft und Vergleich der tatsächlichen Schließkraft mit der gewünschten Schließkraft (F5) zur Ermittlung einer Stellgröße für den Exzenterantrieb (E),
  - Regeln des Exzenterantriebs (E) innerhalb des Regelbereichs (RB) mit der ermittelten Stellgröße während des Formschluß,
  - Abbau der Anpreßkraft durch Zurückdrehen des Exzenterantriebs um vorzugsweise den Restwinkel (Δα, der dem Weg (Δs) zuzüglich dem Regelbereich (RB) entspricht,
  - Abbau der Anlagekraft (F3) und Öffnen der Gießform (33) zur Teilentnahme mittels der ersten Einrichtung (10).

13. Verfahren nach Anspruch 12, gekennzeichnet durch die Schritte

- Erfassen der Kraft (Fs) des Kraftsensors (61,62,64) während des gesamten Spritzzyklus und somit auch bei Bewegen des beweglichen Formträgers (11) aus einer Nullage (P0) bis zur Anlageposition (P2) der Gießform (33),
- Vorgeben einer maximal zulässigen Kraft (F1) zum Bewegen des beweglichen Formträgers (11),
- Vergleich der erfaßten Kraft (Fs) mit der vorgebenen maximal zulässigen Kraft (F1) und Abbruch der Formschlußbewegung, wenn die erfaßte Kraft (Fs) größer ist als die maximal zulässige Kraft (F1).

14. Verfahren nach Anspruch 12 oder 13, gekennzeichnet durch die Schritte

- Vorgabe eines Formschutzbereichs beginnend an einem Startpunkt (P1) kurz vor der Anlageposition (P2) und endend an der Anlageposition (P2),
- Vorgabe einer Formschutzkraft (F2), die kleiner als die maximal zulässige Kraft (F1) ist, als Grenzwert für die erfaßte Kraft (Fs) im Formschutzbereich,
- Vergleich der erfaßten Kraft (Fs) mit der Formschutzkraft (F2) und Abbruch der Formschlußbewegung, wenn die erfaßte Kraft (Fs) größer ist als die Formschutzkraft (F2).

**Claims**

1. Mould closing unit for an injection moulding machine for processing Plastic materials, ceramic materials and the like with

   • a stationary mould carrier (12),
   • a moveable mould carrier (11) which between itself and the stationary mould carrier (12) forms a mould retaining space (s) for receiving a casting mould (33),
   • a first device (10) for moving the moveable mould carrier (11) up to the stationary mould carrier (12) and away from it,
   • a second device (24, 30) which is actuable after the first device during mould closure of the casting mould (33) for applying the closing force,
   • a first supporting element (13) for supporting at least the first device (10) which is connected to the stationary mould carrier (12) by means of force transmitting means (25),
   • the first device (10) already bringing the parts of the casting mould (33) roughly into contact while the second device (30), upon actuation, impinges on the first device (10) with the first supporting element (13) and moveable mould carrier (11) and is provided mainly for applying the closing force,

   characterised in that the second device (30) for applying the closing force is preferably an electro-mechanically driven eccentric attachment, the eccentric shaft (34) of which impinges on the first device.

2. Mould closing unit according to claim 1, characterised in that the first device (10) for moving the moveable mould carrier (11) has at least one spindle (16) which is automatically lockable by means of locking means (17) when the closing force is being applied.

3. Mould closing unit according to claim 2, characterised in that a locking disc (17a) is provided on the axis (16a) of the spindle (16) as locking means (17), said locking disc being in connection with the first supporting element (13) against the force of a resilient restoring means (18).

4. Mould closing unit according to claim 2 or 3, characterised in that the locking disc (17a) has a surrounding ring (17b) extending in the longitudinal direction of the spindle (16), said ring (17b) coming into sprung connection with a ring-shaped projection (19a), facing in the opposite direction, of a bearing ring (19) during the locking procedure.

5. Mould closing unit according to claim 4, characterised in that the distance (b) between the ring (17b) of the locking disc (17a) and the ring-shaped projection (19a) of the bearing ring (19) is smaller when the casting mould is closed before application of the closing force than the eccentricity (e) of the eccentric attachment.

6. Mould closing unit according to one of the preceding claims, characterised in that a control device is provided for a serial closing system with the first device (10) and the second device (30), the first device (10) having an electro-motor drive with a mould protection control for the mould protecting phase of the casting mould (33) and in that the control device has a measuring device, designed preferably as a force sensor (63), for detecting the force (Fs) occurring during the movement of the moveable mould carrier (11), said force being provided preferably between the first supporting element (13) and the first device (10).

7. Mould closing unit according to one of the preceding claims, characterised in that at least one further force sensor (61, 62, 64) is provided in the power flux preferably on the joint pin (39) and/or on the force transmitting element (25) and/or on the bearing of the nut (14) of the ball screw spindle (16) at least for detecting the forces occurring after the parts of the casting mould (33) come into contact and if required are provided on the linear potentiometers (65) for detecting the position of the moveable mould carrier (11).

8. Method for operating a mould closing unit according to one of the claims 1 to 7, characterised by the steps

- presetting of a maximum permissible force (F1) for moving the moveable mould carrier (11) and of a contact force (F3) to be applied by the first device (10) when the parts of the casting mould (33) come into contact,
- detection of the force (Fs) during the moving of the moveable mould carrier (11) from a zero-position (P0) to the contact position (P2) of the casting mould (33) by means of a measuring device which is designed preferably as a force sensor (63) and which during the application of the contact pressure (F4), which together with the contact force (F3) forms the closing force (F5), is uncoupled from the power flux by the second device (30),
- comparison of the detected force (Fs) with the preset maximum permissible force (F1) and termination of the mould closure movement when the detected force (Fs) is greater than the maximum permissible force (F1).

9. Method according to claim 8, characterised by the steps

- presetting of a mould protecting range beginning at a starting point (P1) shortly before the contact position (P2) and ending at the contact position (P2),
- presetting of a mould protection force (F2), which is smaller than the maximum permissible force (F1), as a limiting value for the detected force (Fs) in the mould protecting range,
- comparison of the detected force (Fs) with the mould protection force (F2) and termination of the mould closure movement if the detected force (Fs) is greater than the mould protection force (F2).

10. Method according to claim 8 or 9, characterised by the steps

- presetting of a desired closing force (F5) and also detection of the contact pressure (F4) attributable to the second device (30) by subtracting the contact force (F3) from the closing force (F5),
- calculation of the path ($\Delta s$) of the second device (30) required for the contact pressure (F4) after application of the contact force (F3) while taking account of the spring rigidity (f) of the entire system,
- application of the contact pressure (F4), which is controlled and reproduceable from cycle to cycle, by the second device (30) after application of the contact force (F3) for producing the desired closing force (F5).

11. Method according to claims 8 to 10, characterised by the steps

- calculation of the residual angle ($\Delta\alpha$) around which the eccentric drive (E) is to turn until it self-locks so that the path ($\Delta s$) required for the application of the contact pressure (F4) is set,
- calculation of the supplementary angle ($\alpha$) to the residual angle ($\Delta\alpha$),
- actuation of the eccentric drive (E) for setting the supplementary angle ($\alpha$),
- performance of at least one injection cycle with the steps:
- closure of the casting mould (33) and application of the contact force (F3) by means of the first device (10),
- application of the closing force (F5) by actuating the eccentric drive (E) by rotating the eccentric shaft (34) by the residual angle ($\Delta\alpha$),
- injection of a plastified mass for producing a moulded article in a known manner,
- reduction of the contact pressure (F4) by reverse rotation of the eccentric drive by the residual angle ($\Delta\alpha$),
- reduction of the contact force (F3) and opening of the casting mould (33) by means of the first device (10) for the removal of the part.

12. Method for operating a mould closing unit according to one of the preceding claims 1 to 7, characterised by the steps:

- presetting of a contact force (F3) to be applied by the first device (10) when placing the parts of a casting mould (33) in contact,
- presetting of a predetermined closing force (F5),
- calculation of the contact pressure (F4) attributable to the eccentric drive (E) by subtracting the contact force (F3) from the closing force (F5),
- presetting of a control area (RB) within which the eccentric drive (E) is controllable beneath the lock, determined by the dead-centre of the eccentric drive (E), for controlling the closing force,
- calculation of the path ($\Delta s$) required for the contact pressure (F4) which path the eccentric drive (E) must set up after applying the contact force and increase of this path ($\Delta s$) around the control range (RB),
- calculation of the residual angle ($\Delta\alpha$) around which the eccentric drive is to rotate to cover the path ($\Delta s$) and the control range (RB),
- calculation of the supplementary angle ($\alpha$) to the residual angle ($\Delta\alpha$) and actuation of the eccentric drive (E) for adjusting the supplementary angle ($\alpha$),

- performance of at least one injection cycle with the steps:
- application of the contact force (F3) with the first device (10),
- building up of the closing force (F5) by actuating the eccentric drive (E),
- injection of a plastifiable mass into the casting mould for producing a moulded article in the known manner,
- continuous detection of the actual closing force and comparison of the actual closing force with the desired closing force (F5) for calculating a correcting variable for the eccentric drive (E),
- adjustment of the eccentric drive (E) within the control area (RB) by the detected correcting value during mould closure,
- reduction of the contact pressure by reverse rotation of the eccentric drive by preferably the residual angle ($\Delta\alpha$) which corresponds to the path ($\Delta s$) plus the control area (RB),
- reduction of the contact force (F3) and opening of the casting mould (33) for removal of the part by means of the first device (10).

13. Method according to claim 12, characterised by the steps

- detection of the force (Fs) of the force sensor (61, 62, 64) during the entire injection cycle and hence also during the movement of the moveable mould carrier (11) from a zero-position (P0) to the contact position (P2) of the casting mould (33),
- presetting of a maximum permissible force (F1) for moving the moveable mould carrier (11),
- comparison of the detected force (Fs) with the preset maximum permissable force (F1) and termination of the mould closure movement when the detected force (Fs) is greater than the maximum permissible force (F1).

14. Method according to claim 12 or 13, characterised by the steps

- presetting of a mould protecting range beginning at a starting point (P1) shortly before the contact position (P2) and ending at the contact position (P2),
- presetting of a mould protection force (F2), which is smaller than the maximum permissible force (F1), as the limiting value for the detected force (Fs) in the mould protecting range,
- comparison of the detected force (Fs) with the mould protecting force (F2) and termination of the mould closure movement, when the detected force (Fs) is greater than the mould protecting force (F2).

**Revendications**

1. Unité de fermeture de moule pour une machine à mouler par injection pour la transformation de matières plastiques, de matières céramiques, et autres, avec

   - un porte-moule stationnaire (12),
   - un porte-moule mobile (11), qui forme entre lui et le porte-moule stationnaire (12) un espace de serrage du moule (S) pour recevoir un moule (33),
   - un premier dispositif (10) pour amener le porte-moule mobile (11) sur le porte-moule stationnaire (12) et l'écarter de ce dernier,
   - un second dispositif (24, 30) actionnable après le premier dispositif, pendant la fermeture du moule (33), pour appliquer la force de fermeture,
   - un premier élément d'appui (13), prévu pour supporter au moins le premier dispositif (10) et relié au porte-moule stationnaire (12) par des moyens de transmission des forces (25),
   - le premier dispositif (10) amenant déjà les parties du moule (33) à peu près en contact, tandis que le second dispositif (30), lors de son actionnement, sollicite le premier dispositif (10), avec le premier élément d'appui (13) et le porte-moule mobile (11), et est prévu essentiellement pour appliquer la force de fermeture ,

   caractérisée en ce que le second dispositif (30) pour l'application de la force de fermeture est de préférence un excentrique à entraînement électromécanique, dont l'arbre d'excentrique (34) sollicite le premier dispositif.

2. Unité de fermeture de moule suivant la revendication 1, caractérisée en ce que le premier dispositif (10) pour le déplacement du porte-moule mobile (11) présente au moins une broche (16), qui peut être bloquée automatiquement par des moyens de blocage (17) lors de l'application de la force de fermeture.

3. Unité de fermeture de moule suivant la revendication 2, caractérisée en ce qu'un disque de blocage (17a) est prévu comme moyen de blocage (17) sur l'axe (16a) de la broche (16), ce disque arrivant en liaison avec le premier élément d'appui (13) contre la force d'un moyen de rappel élastique (18).

4. Unité de fermeture de moule suivant l'une des revendications 2 et 3, caractérisée en ce que le disque de blocage (17a) présente une bague périphérique (17b), qui s'étend dans le sens longitudinal de la broche (16) et arrive en liaison par force d'adhérence, lors du processus de blocage, avec une saillie annulaire (19a), dirigée dans le sens contraire, d'une bague d'appui (19).

5. Unité de fermeture de moule suivant la revendication 4, caractérisée en ce que la distance (b) entre la bague (17b) du disque de blocage (17a) et la saillie annulaire (19a) de la bague d'appui (19) est inférieure à l'état de fermeture du moule, avant l'application de la force de fermeture, à l'excentricité (e) de l'excentrique.

6. Unité de fermeture de moule suivant l'une des revendications précédentes, caractérisée en ce qu'un dispositif de commande est prévu pour un système de fermeture en série avec le premier dispositif (10) et le second dispositif (30), le premier dispositif (10) présentant un entraînement par moteur électrique avec une commande de protection du moule pour la phase de protection du moule (33), et en ce que le dispositif de commande présente un dispositif de mesure, réalisé de préférence sous forme de capteur de force (63), pour la détermination de la force (Fs) produite lors du déplacement du porte-moule mobile (11), ce dispositif étant de préférence prévu entre le premier élément d'appui (13) et le premier dispositif (10).

7. Unité de fermeture de moule suivant l'une des revendications précédentes, caractérisée en ce qu'au moins un autre capteur de force (61, 62, 64) est prévu dans le flux, de préférence sur l'axe d'articulation (39) et/ou sur l'élément de transmission des forces (25) et/ou sur le supportage de l'écrou (14) de la vis-écrou à billes (16), du moins pour la détermination des forces produites après le contact des parties du moule (33), et si besoin est sur le potentiomètre linéaire (65) pour la détermination de la position du porte-moule mobile (11).

8. Procédé pour opérer une unité de fermeture de moule suivant l'une des revendications 1 à 7, caractérisé par les phases :

   - Prédéfinition d'une force maximale admissible (F1) pour le déplacement du porte-moule mobile (11), et d'une force de contact (F3), à appliquer par le premier dispositif (10), lors du contact des parties du moule (33),
   - Enregistrement de la force (Fs) pendant le déplacement du porte-moule mobile (11) à partir d'une position zéro (PO) jusqu'à une position de contact (P2) du moule (33), au moyen d'un dispositif de mesure réalisé de préférence sous forme de capteur de force (63), qui est découplé du flux par le second dispositif (30) pendant l'application de la force de serrage (F4), qui forme la force de fermeture (F5) avec la force de contact (F3),

   - Comparaison de la force (Fs) enregistrée avec la force maximale admissible prédéfinie (F1), et interruption du mouvement de fermeture du moule, si la force enregistrée (Fs) est supérieure à la force maximale admissible (F1).

9. Procédé suivant la revendication 8, caractérisé par les phases :

   - Prédéfinition d'une zone de fermeture du moule commençant à un point de départ (P1) peu avant la position de contact (P2) et s'achevant à la position de contact (P2),
   - Prédéfinition d'une force de protection du moule (F2), inférieure à la force maximale admissible (F1), comme valeur limite pour la force enregistrée (Fs) dans la zone de protection du moule,
   - Comparaison de la force enregistrée (Fs) avec la force de protection du moule (F2), et interruption du mouvement de fermeture du moule si la force (Fs) enregistrée est supérieure à la force de protection du moule (F 2).

10. Procédé suivant l'une des revendications 8 et 9, caractérisé par les phases :

   - Prédéfinition d' une force de fermeture souhaitée (F5), ainsi que détermination de la force de serrage (F4), afférente au second dispositif (30), par soustraction de la force de contact (F3) de la force de fermeture (F5),
   - Calcul du parcours (Δs), requis pour la force de serrage (F4), du second dispositif (30), après l'application de la force de contact (F3), compte tenu de la rigidité des ressorts (f) de l'ensemble du système,
   - Application contrôlée, reproductible de cycle en cycle, de la force de serrage (F4) par le second dispositif (30) après l'application de la force de contact (F3) pour produire la force de fermeture souhaitée (F5).

11. Procédé suivant l'une des revendications 8 à 10, caractérisé par les phases

   - Calcul de l'angle résiduel (Δα), pour tourner la commande à excentrique (E) jusqu'au maintien, afin que s'établisse le parcours (Δs) requis pour l'application de la force de serrage (F4),
   - Calcul de l'angle supplémentaire (α) à l'angle résiduel (Δα),
   - Actionnement de la commande à excentrique (E) pour régler l'angle supplémentaire (α),
   - Exécution d'au moins un cycle d'injection avec les phases :
   - Fermeture du moule (33) et application de la force de contact (F3) au moyen du premier dispositif (10),

- Application de la force de fermeture (F5) par actionnement de la commande à excentrique (E), par rotation de l'arbre d'excentrique (34) de l'angle résiduel (Δα),
- Injection d'une matière plastifiée pour fabriquer une pièce injectée de manière connue,
- Suppression de la force de serrage (F4) par rotation inverse de la commande à excentrique de l'angle résiduel (Δα),
- Suppression de la force de contact (F3) et ouverture du moule (33) au moyen du premier dispositif (10) pour la reprise des pièces.

12. Procédé pour opérer une unité de fermeture de moule suivant l'une des revendications précédentes 1 à 7, caractérisé par les phases :

- Prédéfinition d'une force de contact (F3), à appliquer par le premier dispositif (10), lors du contact des parties du moule (33),
- Prédéfinition d'une force de fermeture (F5) prédéfinie,
- Calcul de la force de serrage (F4), afférente à la commande à excentrique (E), par soustraction de la force de contact (F3) de la force de fermeture (F5),
- Prédéfinition d'une plage de réglage (RB), à l'intérieur de laquelle peut être réglée la commande à excentrique (E), au-dessous du maintien défini par la position au point mort de la commande à excentrique (E), pour le réglage de la force de fermeture,
- Calcul du parcours (Δs), requis pour la force de serrage (F4), que doit appliquer la commande à excentrique (E) après l'application de la force de contact (F3), et élévation de ce parcours (Δs) de la plage de réglage (RB),
- Calcul de l'angle résiduel (Δα), dont doit être tournée la commande à excentrique pour parcourir le parcours (Δs) et la plage de réglage (RB),
- Calcul de l'angle supplémentaire (α) a l'angle résiduel (Δα) et actionnement de la commande à excentrique (E) pour le réglage de l'angle supplémentaire (α),
- Exécution d'au moins un cycle d'injection avec les phases :
- Application de la force de contact (F3) par le premier dispositif (10),
- Etablissement de la force de fermeture (F5) par actionnement de la commande à excentrique (E),
- Injection d'une matière plastifiable dans le moule pour fabriquer une pièce injectée de manière connue,
- Enregistrement en continu de la force de fermeture effective, et comparaison de la force de fermeture effective avec la force de fermeture (F5) voulue pour la détermination d'une grandeur réglante pour la commande à excentrique (E),
- Réglage de la commande à excentrique (E) à l'intérieur de la plage de réglage (RB) avec la grandeur réglante déterminée pendant la fermeture du moule,
- Suppression de la force de serrage par rotation inverse de la commande à excentrique de préférence de l'angle résiduel (Δα), qui correspond au parcours (Δs) plus la plage de réglage (RB),
- Suppression de la force de contact (F3) et ouverture du moule (33) pour la reprise des pièces au moyen du premier dispositif (10).

13. Procédé suivant la revendication 12, caractérisé par les phases

- Enregistrement de la force (Fs) du capteur de force (61, 62, 64) pendant tout le cycle d'injection, donc également lors du déplacement du porte-moule mobile (11) d'une position zéro (PO) jusqu'à la position de contact (P2) du moule (33),
- Prédéfinition d'une force maximale admissible (F1) pour le déplacement du porte-moule mobile (11),
- Comparaison de la force enregistrée (Fs) avec la force maximale admissible prédéfinie (F1), et interruption du mouvement de fermeture du moule si la force enregistrée (Fs) est supérieure à la force maximale admissible (F1).

14. Procédé suivant l'une des revendications 12 et 13, caractérisé par les phases

- Prédéfinition d'une zone de protection du moule commençant à un point de départ (P1) peu avant la position de contact (P2) et s'achevant à la position de contact (P2),
- Prédéfinition d'une force de protection du moule (F2), qui est inférieure à la force maximale admissible (F1), comme valeur limite pour la force enregistrée (Fs) dans la zone de protection du moule,
- Comparaison de la force enregistrée (Fs) avec la force de protection du moule (F2), et interruption du mouvement de fermeture du moule si la force enregistrée (Fs) est supérieure à la force de protection du moule (F2).

FIG. 1

FIG. 2

FIG. 3

EP 0 674 985 B1

# FIG. 4

FIG. 5

S1

Eingabe
F1, F2, F3, F5

S2

Berechnen
F4 = F5 - F3

S3

Excenterwinkel
berechnen, einstellen

S4

$$\alpha = 180° - \Delta\alpha$$
$$\Delta\alpha = \arccos\left[1 - \frac{F4}{f \times e}\right]$$

S5

bew. Formträger
verfahren von
P0 nach P1,wenn Fs ≤ F1

S6

bew. Formträger
verfahren von
P1 nach P2,wenn Fs ≤ F2

S7

bew. Formträger an festen
Formträger anlegen bis
Sensor meldet Anlagekraft
erreicht (Fs = F3)

S8

Excenter drehen bis auf
Selbsthemmung (α = 180°)

Signal
→ Werkzeug
geschlossen

— — — EINSPRITZVORGANG

S9

Excenter zurückdrehen
um Δα

S10

bew. Formträger
verfahren von
P2 nach P0

— — — — — TEILENTNAHME

FIG. 6

FIG. 7

FIG. 8

$\Delta s = f(\Delta \alpha)$

$\Delta s = e - e \times \cos \Delta \alpha$

$F4 = f \times \Delta s$

FIG. 9

S1

Eingabe
F1, F2, F3, F5

S2

Berechnen
F4 = F5 - F3

S3

Excenterwinkel
berechnen, einstellen

S44

$$\alpha = 180° - \Delta\alpha - RB$$
$$\Delta\alpha = arccos \left[1 - \frac{F4}{f \times e}\right]$$

S5

bew. Formträger
verfahren von
P0 nach P1, wenn Fs ≤ F1

S6

bew. Formträger
verfahren von
P1 nach P2, wenn Fs ≤ F2

S7

bew. Formträger an festen
Formträger anlegen bis
Sensor meldet Anlagekraft
erreicht (Fs = F3)

S88

Excenter drehen bis auf
Zuhaltekraft (Fs = F5)
bei (180° - RB ≤ α ≤ 180°)

Signal
Werkzeug
geschlossen

EINSPRITZVORGANG mit
dauerndem Soll/Ist-
vergleich von F5

S99

Excenter zurückdrehen
auf α = 180° - Δα - RB

S10

bew. Formträger
verfahren von
P2 nach P0

FIG.10

TEILENTNAHME